(19) Europäisches Patentamt / European Patent Office / Office européen des brevets

(11) **EP 2 040 479 A2**

(12) **EUROPEAN PATENT APPLICATION**

(43) Date of publication:
**25.03.2009 Bulletin 2009/13**

(51) Int Cl.:
***H04N 13/00*** *(2006.01)*

(21) Application number: **08164208.4**

(22) Date of filing: **12.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.09.2007 JP 2007244295**

(71) Applicant: **Kabushiki Kaisha Toshiba**
**Minato-ku,**
**Tokyo 105-8001 (JP)**

(72) Inventor: **KOKOJIMA, Yoshiyuki,**
**c/o Toshiba Corporation**
**Tokyo 105-8001 (JP)**

(74) Representative: **Delumeau, François Guy et al**
**Cabinet Beau de Loménie**
**158 Rue de l'Université**
**75340 Paris Cedex 07 (FR)**

(54) **Apparatus, method, and computer program product for rendering multi-viewpoint images**

(57) For each of rendering programs in each of which a rendering procedure is described, a piece of shape data indicating a shape of a rendering target object serving as a rendering target is specified, and also information related to viewpoint positions that are different from one another is specified as a rendering condition that is used when the rendering program is executed. A multi-viewpoint image that is obtained by rendering a rendering target object with respect to each of the viewpoint positions is generated by sequentially rendering, in correspondence with execution of each of the rendering programs, images of the rendering target object to be rendered by using the rendering program, while the viewpoint is changed one after another.

**Description**

BACKGROUND OF THE INVENTION

1. Field of the Invention

The present invention relates to a picture displaying apparatus, a method, and a computer program product for rendering a multi-viewpoint image.

2. Description of the Related Art

In a stereoscopic image displaying apparatus that is conventionally known, a composite image is generated by arranging, in a discrete manner, the pixels that are contained in a plurality of images having mutually different parallaxes (hereinafter, "parallax images"). The orbits of the light beams emitted from the pixels in the composite image are controlled by an light beam controlling element so that a viewer is able to perceive a stereoscopic image.

The composite image described above is not directly generated from the parallax images, but is generated via an intermediate image (hereinafter, a "multi-viewpoint image") that is rendered by arranging the parallax images in a tile-like formation. In this situation, the multi-viewpoint image is generated by repeating a series of procedures in which, after all the rendering target objects have been rendered with respect to one viewpoint for each of the rendering areas that are arranged in a tile-like formation, the viewpoint is changed to a new one so that all the rendering target objects are rendered again with respect to the new viewpoint.

It has been learned that, when the composite image is generated via such a multi-viewpoint image, it is possible to improve the rendering speed. For example, Japanese Patent No. 3358466 discloses a technique for performing various types of data processing such as an encoding process, a storing process, a transferring process, and a decoding process on a multi-viewpoint image that is made up of rendered images arranged in a tile-like formation, before changing the formation in which the pixels are arranged'so that the multi-viewpoint image can be converted into a final composite image.

Also, in the case where a stereoscopic image is rendered by using a Computer Graphics (CG) technique, it is effective to use a method in which, after a multi-viewpoint image serving as an intermediate image is rendered, the formation in which the pixels are arranged is changed by using hardware that is especially designed for the purpose so that the multi-viewpoint image is converted into a final composite image. By having an arrangement in which writing to a specific pixel is prohibited by a CG technique such as stencil buffer or polygon stipple, it is possible to directly render the final composite image without generating the intermediate multi-viewpoint image. However, in that case, the rendering speed tends to be lower than the case where the intermediate multi-viewpoint image is used.

When such a multi-viewpoint image is rendered while a plurality of viewpoints are used as the points of reference, the amounts of calculations and processes that are required in the rendering process are very much larger than those required when a single-viewpoint image is rendered while a single viewpoint is used as a point of reference. Thus, a technique that makes it possible to render a stereoscopic image having high quality at a high speed is in demand.

SUMMARY OF THE INVENTION

According to one aspect of the present invention, a multi-viewpoint image rendering apparatus includes a first storing unit that stores shape data indicating shapes of rendering target objects, a plurality of rendering programs in each of which a rendering procedure is described, and viewpoint data defining information related to a plurality of viewpoint positions that are different from one another; a first specifying unit that specifies one of the rendering programs and a rendering target for each of the rendering programs; a second specifying unit that specifies the respective viewpoint positions defined in the viewpoint data as a rendering condition that is used when each of the rendering programs is executed; a rendering unit that sequentially renders the shape data specified as the rendering target for the rendering program, with respect to each of the viewpoint positions specified as the rendering condition, for execution of each of the rendering programs, and generates a multi-viewpoint image composed of a plurality of rendered images respectively corresponding to the viewpoint positions; and a second storing unit that stores the multi-viewpoint image generated by the rendering unit.

According to another aspect of the present invention, a multi-viewpoint image rendering method includes specifying a rendering program and a rendering target for each of a plurality of rendering from shape data indicating shapes of rendering target objects, the plurality of rendering programs in each of which a rendering procedure is described, and viewpoint data defining information related to a plurality of viewpoint positions that are different from one another; specifying viewpoint positions that are different from one another as a rendering condition used when each of the rendering programs is executed; and sequentially rendering the shape data specified as the rendering target for the rendering program, with respect to each of the viewpoint positions specified as the rendering condition, for execution of each of the rendering programs, and generating a multi-viewpoint image composed of a plurality of rendered images respectively corresponding to the viewpoint positions.

A computer program product according to still another aspect of the present invention causes a computer to perform the method according to the present invention.

BRIEF DESCRIPTION OF THE DRAWINGS

Fig. 1 is a diagram of a hardware configuration of a multi-viewpoint image rendering apparatus;

Fig. 2 is a drawing for explaining a structure of the displaying unit shown in Fig. 1;

Fig. 3 is a block diagram of a functional configuration of a multi-viewpoint image rendering apparatus according to a first embodiment of the present invention;

Fig. 4 is a drawing illustrating an example of an image rendered by using a rendering program;

Fig. 5 is a diagram illustrating a multi-viewpoint image rendering unit;

Fig. 6 is a flowchart of a procedure in a multi-viewpoint image rendering process according to the first embodiment;

Fig. 7 is a schematic drawing illustrating storage areas within a multi-viewpoint image storing unit;

Fig. 8 is a drawing for explaining the multi-viewpoint image rendering process according to the first embodiment;

Fig. 9 is another drawing for explaining the multi-viewpoint image rendering process according to the first embodiment;

Fig. 10 is yet another drawing for explaining the multi-viewpoint image rendering process according to the first embodiment;

Fig. 11 is a drawing for explaining a comparative multi-viewpoint image rendering method;

Fig. 12 is another drawing for explaining the comparative multi-viewpoint image rendering method;

Fig. 13 is a block diagram of a functional configuration of a multi-viewpoint image rendering apparatus according to a second embodiment of the present invention;

Fig. 14 is a drawing illustrating an example of partial areas;

Fig. 15 is a flowchart of a procedure in a multi-viewpoint image rendering process according to the second embodiment;

Fig. 16 is a drawing for explaining the multi-viewpoint image rendering process according to the second embodiment;

Fig. 17 is another drawing for explaining the multi-viewpoint image rendering process according to the second embodiment;

Fig. 18 is yet another drawing for explaining the multi-viewpoint image rendering process according to the second embodiment;

Fig. 19 is yet another drawing for explaining the multi-viewpoint image rendering process according to the second embodiment;

Fig. 20 is yet another drawing for explaining the multi-viewpoint image rendering process according to the second embodiment;

Fig. 21 is yet another drawing for explaining the multi-viewpoint image rendering process according to the second embodiment;

Fig. 22 is a diagram illustrating a functional configuration of a multi-viewpoint image rendering apparatus according to a third embodiment of the present invention;

Fig. 23 is a drawing illustrating an example of a scene graph; and

Fig. 24 is a flowchart of a procedure in a multi-viewpoint image rendering apparatus according to the third embodiment.

DETAILED DESCRIPTION OF THE INVENTION

Exemplary embodiments of an apparatus, a method, and a computer program product for rendering a multi-viewpoint image according to the present invention will be explained in detail, with reference to the accompanying drawings.

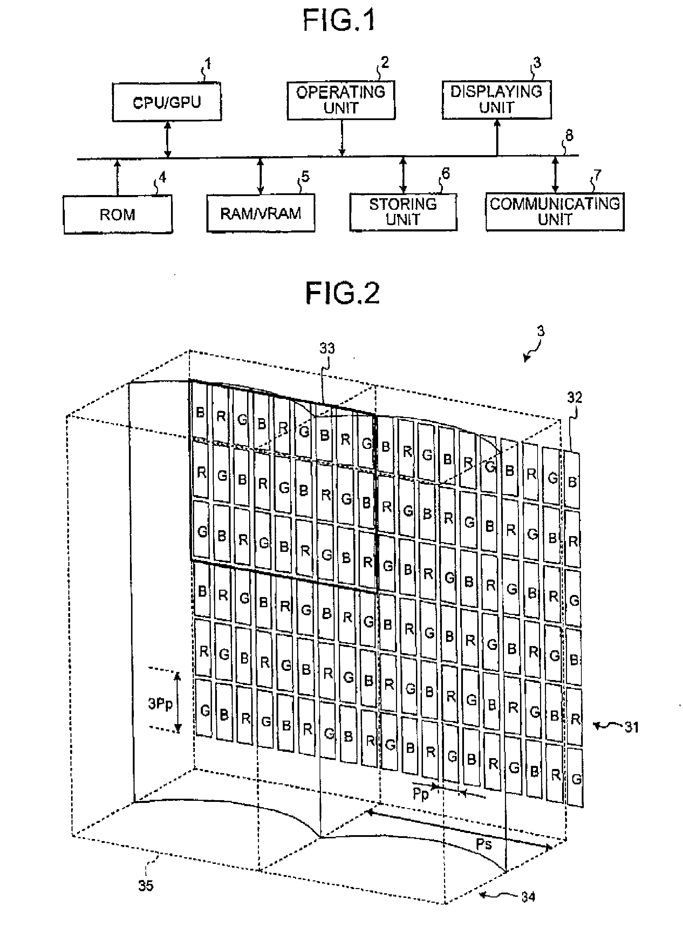

Fig. 1 is a block diagram of a hardware configuration of a multi-viewpoint image rendering apparatus according to the exemplary embodiments of the present invention. As shown in Fig. 1, the multi-viewpoint image rendering apparatus includes a Central Processing Unit (CPU)/Graphics Processing Unit (GPU) 1, an operating unit 2, a displaying unit 3, a Read Only Memory (ROM) 4, a Random Access Memory (RAM)/Video Random Access Memory (VRAM) 5, a storing unit 6, and a communicating unit 7. These constituent elements are connected to one another via a bus 8.

The CPU/GPU 1 uses a predetermined area within the RAM/VRAM 5 as a working area thereof and performs various types of processes while collaborating with various types of controlling programs that are stored, in advance, in the ROM 4 or the storing unit 6, so as to control operations of the constituent elements of a multi-viewpoint image rendering apparatus 100 in an integrated manner. In addition, the CPU/GPU 1 realizes the functions of the functional units, which are explained later, by collaborating with a predetermined program that is stored, in advance, in the ROM 4 or the storing unit 6.

The operating unit 2 is an_input device such as a mouse and/or a keyboard. The operating unit 2 receives information that has been input through a user operation as an instruction signal and outputs the instruction signal to the CPU/GPU 1.

The displaying unit 3 includes a display device such as a Liquid Crystal Display (LCD) and an light beam controlling element such as a lenticular lens. The displaying unit 3 is a stereoscopic image display device that presents a stereoscopic image by controlling a presenting unit 15, which is explained later.

Fig. 2 is a schematic perspective view illustrating an example of the structure of the displaying unit 3. In the explanation below, it is assumed that the number of viewpoints "n" is nine (i.e., n=9), As shown in Fig. 2, the displaying unit 3 includes a display device 31 and a lenticular plate 34 that serves as the light beam controlling element and is disposed in front of the display surface of the display device 31.

On the display surface of the display device 31, sub-pixels 32 each having a length-to-width ratio of 3:1 are linearly arranged in the row direction (i.e., in the direction of the width of each pixel). The sub-pixels 32 are arranged in a matrix formation so that a set of pixels corresponding to the colors of red (R), (G), and (B) repeatedly appears in the row direction in every row. Also, the sub-pixels 32 are linearly arranged in the column direction (i.e., in the direction of the length of each pixel). Again, the sub-pixels 32 are arranged so that a set of pixels corresponding to the colors of red (R), (G), and (B) repeatedly appears in the column direction in every column. The column-direction cycle (3Pp) in each row of the sub-pixels 32 is three times longer than the row-direction cycle (Pp) of the sub-pixels 32.

In a commonly-used color image displaying apparatus, a set of three sub-pixels 32 corresponding to the colors of RGB that are linearly arranged in the row direction constitutes a minimum unit for which it is possible to arbitrarily set the luminance and the color. Thus, each of the sub-pixels has the length-to-width ratio of 3:1. In Fig. 2, an example is shown in which, on the display surface an effective pixel 33 (marked with a bold frame) is formed by sets of sub-pixels 32, each of the sets being made up of three sub-pixels 32 corresponding to RGB that are arranged in the column direction.

Each of cylindrical lenses 35 that are included in the lenticular plate 34 is disposed substantially to the front of the effective pixels 33. The pitch (Ps) in the horizontal direction (i.e., the row direction) of the cylindrical lenses 35 is nine times longer than the row-direction cycle (Pp) of the sub-pixels 32 that are arranged on the display surface. With this arrangement, the sub-pixel 32 that is viewed in an enlarged manner through the cylindrical lens changes, while the viewing position in the horizontal direction changes. In other words, the viewer is able to perceive a stereoscopic image because the view of a composite image displayed by the effective pixels 33 changes. In this situation, the composite image corresponds to a composite image generated by a multi-viewpoint image converting unit 14, which is explained later.

Returning to the description of Fig. 1, the ROM 4 stores therein, in a rewritable manner, programs and various types of setting information that are related to the control of the multi-viewpoint image rendering apparatus.

The RAM/VRAM 5 is a volatile storage means such as a Synchronous Dynamic Random Access Memory (SDRAM) or a Double Data Rate (DDR) memory and functions as a working area for the CPU/GPU 1. More specifically, the RAM/VRAM 5 serves as a buffer area that temporarily stores therein an intermediate image and values of various types of variables and parameters that are used while the composite image is generated during a multi-viewpoint image rendering process as described later. The RAM/VRAM 5 may be configured with a plurality of storage media that are of mutually different types.

The storing unit 6 includes a storage medium that is able to record data thereon magnetically or optically. The storing unit 6 stores therein, in a rewritable manner, programs and various types of information that are related to the control of the multi-viewpoint image rendering apparatus. More specifically, the storing unit 6 stores therein the programs and the various types of information that are related to execution of the multi-viewpoint image rendering process described later.

The communicating unit 7 is an interface that communicates with external devices. The communicating unit 7 outputs various types of received information to the CPU/GPU 1, and also transmits various types of information that is output from the CPU/GPU 1 to the external devices.

Next, a functional configuration of the multi-viewpoint image rendering apparatus 100 according to a first embodiment of the present invention will be explained. It is assumed that the multi-viewpoint image rendering apparatus 100 has the hardware configuration, as shown in Fig. 1.

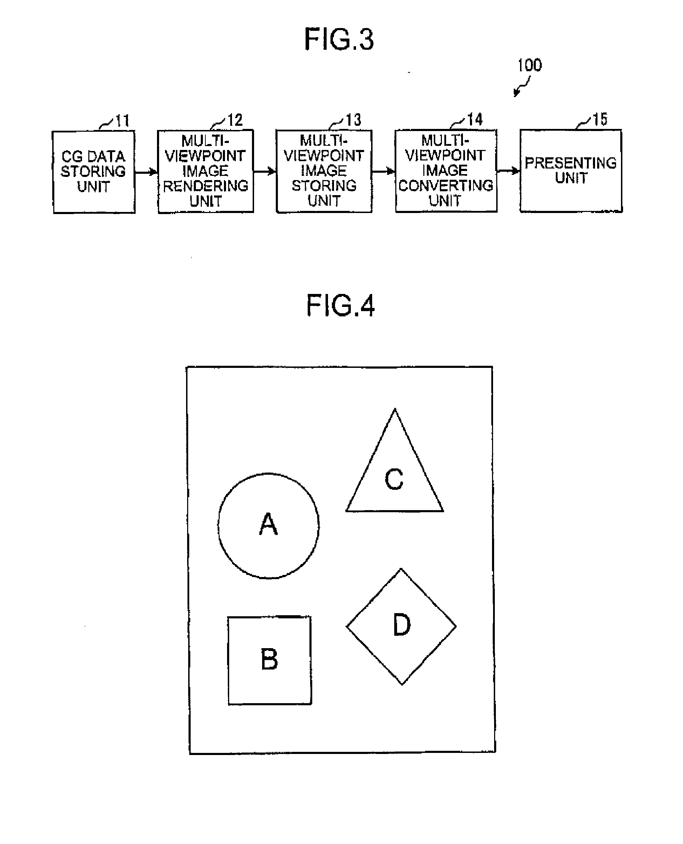

Fig. 3 is a block diagram of a functional configuration of the multi-viewpoint image rendering apparatus 100 that is realized by a collaboration of the CPU/GPU 1 and a predetermined program that is stored, in advance, in the ROM 4 or the storing unit 6. As shown in the drawing, the multi-viewpoint image rendering apparatus 100 includes a CG data storing unit 11, a multi-viewpoint image rendering unit 12, a multi-viewpoint image storing unit 13, a multi-viewpoint image converting unit 14, and the presenting unit 15.

The CG data storing unit 11 is a storage area prepared in the storing unit 6 that stores therein various types of data (hereinafter, "CG data") that are required in a process of rendering a multi-viewpoint image, such as viewpoint data related to viewpoint positions, shape data related to the shapes of target objects to be rendered, light source data related to the light source, texture data related to texture images of the target objects to be rendered, programs (hereinafter, "rendering programs") in each of which a procedure in the rendering process is described.

Of the CG data, the viewpoint data includes information related to the total number of viewpoints that are used when a target object is rendered, the positions of the viewpoints (hereinafter, "viewpoint positions"), distances between the viewpoints, the distance from each viewpoint to the target object to be rendered (hereinafter "distance of sight"), and the direction of viewing from each of the viewpoint positions. A viewpoint number is uniquely assigned, in advance, to each of the viewpoint positions. The various types of information are kept in correspondence with each of the viewpoints by using the viewpoint numbers.

The shape data includes polygon data that indicates the shape of each rendering target object (i.e., each object) as well as data related to an imaginary space in which the objects are positioned. The texture data includes data related to an image (hereinafter, a "texture image") that is to be pasted on the surface of the polygon data. The light source data is a group of pieces of data that is related to the light source being used to irradiate the object and that includes information about, for example, the intensity of the light source, the position of the light source, the position of radiation, the light source vector, the range of radiation, and the color of the light source.

The rendering programs are programs in each of which the procedure for rendering a rendering target object as being viewed from each of the viewpoint positions is described, based on the various types of data described above. One rendering program is individually prepared for each of characteristics of rendering target objects. According to the first embodiment, to identify each rendering program, a rendering program number P (where P is an integer) is assigned to each of the rendering programs. In this situation, the characteristics of the rendering target objects include a degree of similarity between the materials of which the rendering target objects are made and between the reflective characteristics of the rendering target objects, as well as a degree of similarity between rendering methods. Based on these characteristics, when it has been judged that it is possible to render two or more rendering target objects by using mutually the same rendering program identified with the same rendering program number, these rendering target objects will be rendered by using mutually the same rendering program identified with the same rendering program number. An arrangement is acceptable in which the relationships between the rendering programs and the rendering target objects may be defined in advance. Alternatively, another arrangement is also acceptable in which the multi-viewpoint image rendering unit 12 selects a rendering program to be used, according to the characteristics of each rendering target object.

For example, let us discuss an example in which a rendering program identified with a rendering program number 0 is used for rendering a rendering target object A, whereas a rendering program identified with a rendering program number 1 is used for rendering a rendering target object B, while a rendering program identified with a rendering program number 2 is used for rendering the rendering target objects C and D. When these three rendering programs are executed, an image (i.e., a parallax image) as shown in Fig. 4 is rendered. In Fig. 4, the graphics of the rendering target objects A, B, C, D that are obtained as being viewed from a specific one of a plurality of viewpoint positions (i.e., from a single viewpoint).

According to the first embodiment, it is assumed that all of the viewpoint data that is required in the rendering process of the multi-viewpoint image is stored in the CG data storing unit 11. However, another arrangement is acceptable in which only the data related to representative viewpoints is stored in the CG data storing unit 11. In this situation, an arrangement is acceptable in which the rest of the viewpoint data is complemented as being calculated by the multi-viewpoint image rendering unit 12. Also, the format of the CG data stored in the CG data storing unit 11 is not limited to the one described above. The CG data may include other data that is required in the rendering process of a desired CG.

The multi-viewpoint image rendering unit 12 renders one multi-viewpoint image in which images respectively corresponding to mutually different viewpoints are arranged in a tile-like formation, by sequentially rendering, while the viewpoint is changed one after another, images of the target object to be rendered by using each of the corresponding rendering program, based on the CG data stored in the CG data storing unit 11. Next, the multi-viewpoint image rendering unit 12 will be explained in detail.

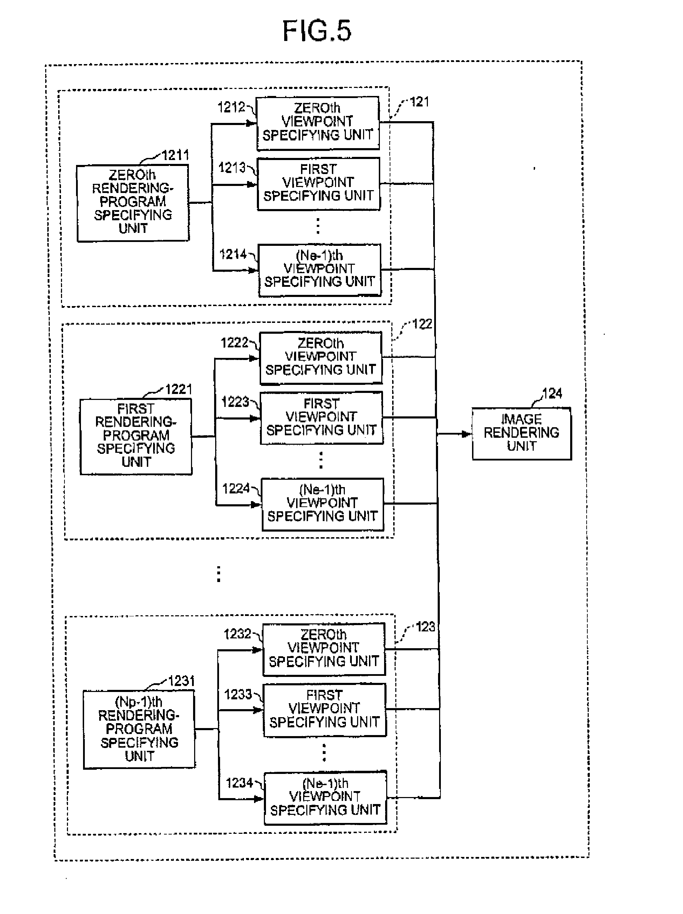

Fig. 5 is a diagram illustrating the multi-viewpoint image rendering unit 12. As shown in Fig. 5, the multi-viewpoint image rendering unit 12 includes a plurality of rendering specifying units (i.e., rendering specifying units 121, 122, and 123) and an image rendering unit 124. In this example, the number of rendering specifying units is in correspondence with the number of rendering programs contained in the CG data. In Fig. 5, an example is shown in which the multi-viewpoint image rendering unit 12 includes as many rendering specifying units as Np (where Np is an integer). The "Pth" (where P satisfies 0=P=Np-1) as in a zeroth rendering program specifying unit 1211, a first rendering program specifying unit 1221, and a (Np-1)th rendering program specifying unit 1231, which are explained later, corresponds to each of the rendering program numbers assigned to the rendering programs. An arrangement is acceptable in which as many rendering specifying units as the number of rendering programs contained in the CG data are dynamically generated. Alternatively, another arrangement is acceptable in which a predetermined number of rendering specifying units are prepared in advance so that as many rendering specifying units as the number of rendering programs contained in the CG data are used.

In the rendering specifying unit 121, the zeroth rendering program specifying unit 1211 specifies various types of parameters that are required in the execution of the corresponding one of the rendering programs. For example, the zeroth rendering program specifying unit 1211 specifies that the rendering program identified with the rendering program number 0 among the rendering programs contained in the CG data should be executed, and also specifies a rendering target object to be rendered by using the rendering program.

A zeroth viewpoint specifying unit 1212, a first viewpoint specifying unit 1213, and a (Ne-1)th viewpoint specifying unit 1214 each specify, as a rendering condition, a parameter that is related to the corresponding viewpoint and is required during the rendering process of the multi-viewpoint image, with respect to the rendering program for the zeroth rendering program specifying unit 1211, in other words, with respect to the rendering program identified with the rendering program number 0. An arrangement is acceptable in which as many viewpoint specifying units as the number of viewpoints that are defined in the viewpoint data contained in the CG data are dynamically generated. Alternatively, another arrangement is acceptable in which a predetermined number of viewpoint specifying units are prepared in advance so that as many viewpoint specifying units as the number of viewpoints defined in the viewpoint data are used.

In this situation, the "Eth" (where E satisfies 0=E=Ne-1) used to identify each viewpoint specifying unit corresponds to each of the viewpoint numbers. Each of the viewpoint specifying units specifies the parameter based on the viewpoint data corresponding to the viewpoint number. More specifically, the zeroth viewpoint specifying unit 1212 specifies a parameter related to the viewpoint identified with the viewpoint number 0. The first viewpoint specifying unit 1213 specifies a parameter related to the viewpoint identified with the viewpoint number 1. The (Ne-1)th viewpoint specifying unit 1214 specifies a parameter related to the viewpoint identified with the viewpoint number Ne-1.

In the rendering specifying unit 122, like the zeroth rendering program specifying unit 1211, the first rendering program specifying unit 1221 specifies various types of parameters that are required in the execution of the corresponding one of the rendering programs. For example, the first rendering program specifying unit 1221 specifies that the rendering program identified with the rendering program number 1 among the rendering programs contained in the CG data should be executed, and also specifies a rendering target object to be rendered by using the rendering program.

Like the viewpoint specifying units included in the rendering specifying unit 121, a zeroth viewpoint specifying unit 1222, a first viewpoint specifying unit 1223, and a (Ne-1)th viewpoint specifying unit 1224 each specify, as a rendering condition, a parameter that is related to the corresponding viewpoint and is required during the generating process of the multi-viewpoint image, with respect to the rendering program for the first rendering program specifying unit 1221, in other words, with respect to the rendering program identified with the rendering program number 1.

Also, in the rendering specifying unit 123, like the zeroth rendering program specifying unit 1211, the (Np-1)th rendering program specifying unit 1231 specifies various types of parameters that are required in the execution of the corresponding one of the rendering programs. For example, the (Np-1)th rendering program specifying unit 1231 specifies that the rendering program identified with the rendering program number (Np-1) should be executed, and also specifies a rendering target object to be rendered by using the rendering program.

Like the viewpoint specifying units included in the rendering specifying unit 121, a zeroth viewpoint specifying unit 1232, a first viewpoint specifying unit 1233, and a (Ne-1)th viewpoint specifying unit 1234 each specify, as a rendering condition, a parameter that is related to the corresponding viewpoint and is required during the generating process of the multi-viewpoint image, with respect to the rendering program for the (Np-1)th rendering program specifying unit 1231, in other words, with respect to the rendering program identified with the rendering program number (Np-1).

The image rendering unit 124 renders one multi-viewpoint image that is made up of a group of parallax images that are arranged in a tile-like formation, by sequentially executing, for each of the rendering specifying units 121, 122, and 123, the rendering program that corresponds to the rendering specifying unit with respect to the different viewpoints, based on the corresponding parameters that have been specified by the rendering specifying units 121, 122, and 123.

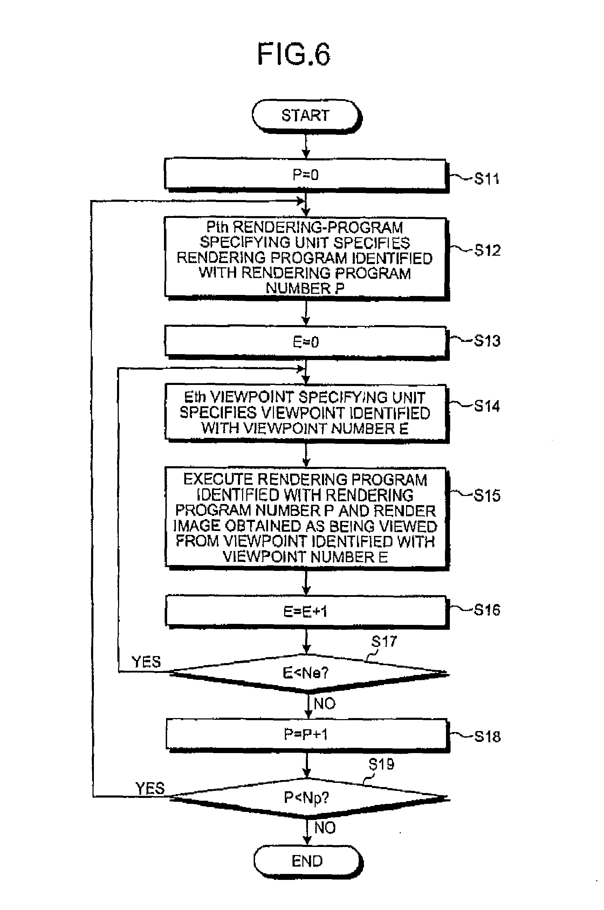

Next, the operation of the multi-viewpoint image rendering unit 12 will be explained. Fig. 6 is a flowchart of a procedure in the multi-viewpoint image rendering process performed by the multi-viewpoint image rendering unit 12.

First, the multi-viewpoint image rendering unit 12 initializes the rendering program number P to 0 (step S11). After that, the Pth rendering program specifying unit specifies a parameter related to the rendering program identified with the rendering program number P (step S12). More specifically, in the case where P=0 is satisfied, the zeroth rendering program specifying unit 1211 specifies a parameter related to the rendering program identified with the rendering program number 0.

Subsequently, the multi-viewpoint image rendering unit 12 initializes the viewpoint number E indicating the viewpoint position to 0 (step S13). After that, the Eth viewpoint specifying unit specifies a parameter related to the viewpoint identified with the viewpoint number E (step S14). More specifically, in the case where P=0 and E=0 are satisfied, the zeroth viewpoint specifying unit 1212 specifies a parameter related to the viewpoint identified with the viewpoint number 0.

The image rendering unit 124 executes the rendering program identified with the rendering program number P of which the parameter has been specified at step S12 and renders an image of the rendering target object that is obtained as being viewed from the viewpoint identified with the viewpoint number E, based on the parameter of the viewpoint number E that has been specified at step S14 (step S15). The image that has been rendered at step S15 is stored into a rendered image area within the multi-viewpoint image storing unit 13 that corresponds to the viewpoint identified with viewpoint number E.

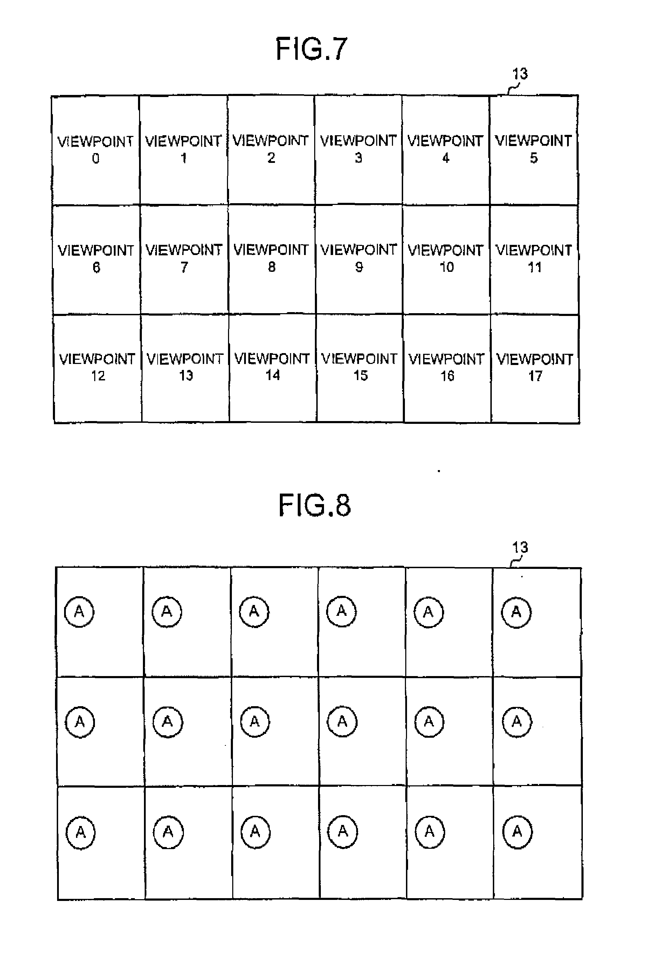

Fig. 7 is a schematic drawing illustrating storage areas (i.e., rendered image areas) that are prepared within the multi-viewpoint image storing unit 13 and are used for rendering a multi-viewpoint image. As shown in Fig. 7, the rendered image areas used for rendering the multi-viewpoint image are configured with a plurality of rendered image areas (hereinafter, "tiles") each of which is prepared for a different one of the viewpoints and that are arranged in a tile-like formation. Into each of the tiles, an image from the corresponding one of the viewpoints (i.e., the corresponding one of the viewpoint numbers) is rendered. In the example shown in Fig. 7, the rendered image areas used for storing the multi-viewpoint image are configured with eighteen tiles that correspond to the eighteen viewpoints, respectively. However, the present invention is not limited to this example. The rendered image areas used for storing the multi-viewpoint image may be configured with an arbitrary number of tiles (i.e., an arbitrary number of viewpoints). Also, although the example in which the eighteen tiles are arranged in a formation of 3 rows by 6 columns is shown, the present invention is not limited to this formation.

Returning to the description of Fig. 6, the multi-viewpoint image rendering unit 12 increments the viewpoint number E by 1 (step S16) and judges whether the value of the viewpoint number E is smaller than the total number of viewpoints Ne (step S17). In the case where the multi-viewpoint image rendering unit 12 has judged that the value of the viewpoint number E is smaller than the total number of viewpoints Ne (step S17: Yes), the process returns to step S14 so that the target of the process is changed to the next viewpoint. More specifically, in the case where P=0 is satisfied, and when E=1 is now satisfied, the first viewpoint specifying unit 1213 specifies a parameter related to the viewpoint identified with the viewpoint number 1.

On the other hand, at step S17, in the case where the multi-viewpoint image rendering unit 12 has judged that the value of the viewpoint number E is equal to or larger than the total number of viewpoints Ne (step S17: No), the multi-viewpoint image rendering unit 12 increments the rendering program number P by 1 (step S18) and judges whether the value of the rendering program number P is smaller than the total number of rendering programs Np (step S19).

At step S19, in the case where the multi-viewpoint image rendering unit 12 has judged that the value of the rendering program number P is smaller than the total number of rendering programs Np (step S19: Yes), the process returns to step S12 so that the target of the process is changed to the next rendering program. More specifically, when P=1 is now satisfied, the first rendering program specifying unit 1221 specifies a parameter related to the rendering program identified with the rendering program number 1.

On the other hand, at step S19, in the case where the multi-viewpoint image rendering unit 12 has judged that the value of the rendering program number P is equal to or larger than the total number of rendering programs Np (step S19: No), the process is ended. As explained above, the multi-viewpoint image rendering process performed by the multi-viewpoint image rendering unit 12 has a dual structure that includes a loop (i.e., a viewpoint loop) at steps S14 through S17 that is related to the viewpoints and another loop at steps S12 through S19 that is related to the rendering programs.

Figs. 8 to 10 are drawings for explaining the process in which the multi-viewpoint image is rendered through the multi-viewpoint image rendering process described above. In these drawings, it is assumed that Ne=18 and Np=3 are satisfied. The graphics A, B, C, and D that are shown in the drawings are rendering target objects that have been rendered by using the rendering programs respectively identified with the rendering program numbers 1 to 3. The rendering target object A is rendered by using the rendering program identified with the rendering program number 0. The rendering target object B is rendered by using the rendering program identified with the rendering program number 1. The rendering target objects C and D are rendered by using the rendering program identified with the rendering program number 2.

Fig. 8 is a drawing illustrating the images that have been rendered in the viewpoint loop in which P=0 is satisfied. In the viewpoint loop in which P=0 is satisfied, the multi-viewpoint image rendering unit 12 executes the rendering program identified with the rendering program number 0 while the viewpoint number E is changed from 0 to 17. As a result, the images of the rendering target object A that are obtained as being viewed from the viewpoints identified with the viewpoint numbers 0 to 17 are rendered in the corresponding tiles, respectively, within the multi-viewpoint image storing unit 13.

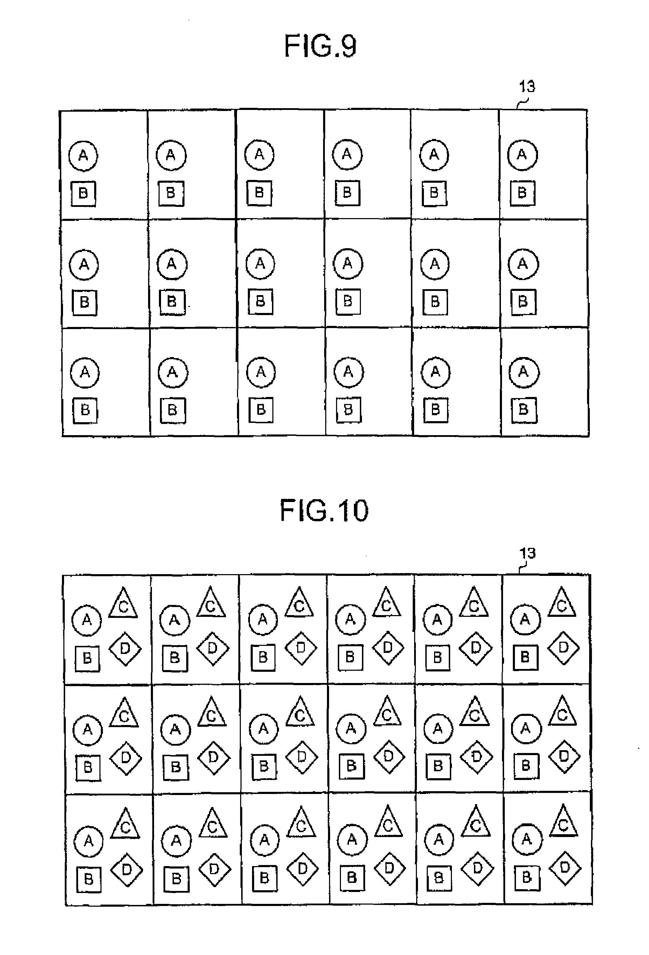

Fig. 9 is a drawing illustrating the images that have been rendered in the following viewpoint loop in which P=1 is satisfied. In the viewpoint loop in which P=1 is satisfied, the multi-viewpoint image rendering unit 12 executes the rendering program identified with the rendering program number 1 while the viewpoint number E is changed from 0 to 17. As a result, the images of the rendering target object B that are obtained as being viewed from the viewpoints identified with the viewpoint numbers 0 to 17 are rendered in the corresponding tiles,' respectively, within the multi-viewpoint image storing unit 13.

Fig. 10 is a drawing illustrating the images that have been rendered in the following viewpoint loop in which P=2 is satisfied. In the viewpoint loop in which P=2 is satisfied, the multi-viewpoint image rendering unit 12 executes the rendering program identified with the rendering program number 2 while the viewpoint number E is changed from 0 to 17. As a result, the images of the rendering target objects C and D that are obtained as being viewed from the viewpoints identified with the viewpoint numbers 0 to 17 are rendered in the corresponding tiles, respectively, within the multi-viewpoint image storing unit 13. As explained above, the multi-viewpoint image rendering unit 12 renders the one multi-viewpoint image by rendering, with respect to each of all the rendering programs contained in the CG data, the images of the rendering target objects that are obtained as being viewed from each of the viewpoints into the corresponding tiles, respectively.

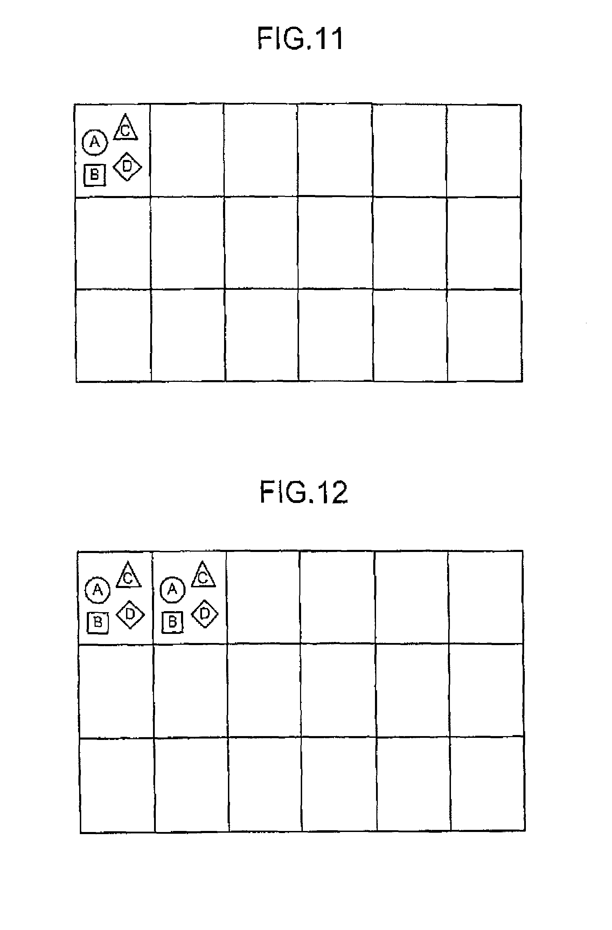

Figs. 11 and 12 are drawings illustrating a comparative multi-viewpoint image rendering method to be compared with the multi-viewpoint image rendering method used by the multi-viewpoint image rendering unit 12 shown in Figs. 8 to 10. As shown in Figs. 11 and 12, according to the comparative multi-viewpoint image rendering method, all the rendering programs are executed for each of the tiles with respect to one viewpoint. When the rendering of the images are completed, the process moves to the next viewpoint. In other words, according to the comparative multi-viewpoint image rendering method, the multi-viewpoint image rendering process is performed in units of viewpoints. When the comparative multi-viewpoint image rendering method is used, the number of times the various types of data that are required during the rendering process are read (i.e., the number of times the various types of data are accessed) can be expressed as "the number of rendering programs"x"the total number of viewpoints"x"the total number of tiles". Thus, the larger the number of the tiles is, the more frequently the data is accessed..

In contrast, according to the multi-viewpoint image rendering method used by the multi-viewpoint image rendering unit 12, the images are sequentially rendered with respect to the different viewpoints by using one of the rendering programs. When the rendering process with the one of the rendering programs is completed, the process moves to the next rendering program. In other words, in the multi-viewpoint image rendering method according to the first embodiment, the multi-viewpoint image rendering process is performed in units of rendering programs. When the multi-viewpoint image rendering method according to the first embodiment is used, the number of times the various types of data that are required during the rendering process are accessed can be expressed as "the number of rendering programs"x"the total number of viewpoints" and is not dependent on the number of tiles. In other words, in the multi-viewpoint image rendering method according to the first embodiment, it is possible to efficiently read the various types of data that are required in the rendering process of the multi-viewpoint image. Consequently, it is possible to reduce redundancy and overhead related to the data transfer.

Returning to the description of Fig. 3, the multi-viewpoint image storing unit 13 is a storage area prepared in the RAM/VRAM 5 or the storing unit 6. The multi-viewpoint image storing unit 13 has rendered image areas as shown in Fig. 7 that are used for the multi-viewpoint image rendering process. It is assumed that the rendered image areas used in the multi-point image rendering process have a sufficient storage capacity for storing therein all the images that are rendered by the multi-viewpoint image rendering unit 12.

The multi-viewpoint image converting unit 14 reads the multi-viewpoint image arranged in the tile-like formation that is stored in the multi-viewpoint image storing unit 13 and generates a composite image used for presenting a stereoscopic image by changing the formation in which the pixels contained in the multi-viewpoint image are arranged. In this situation, it is acceptable to use any method, e.g., any of the methods that are publicly known, for changing the formation in which the pixels are arranged. However, it is preferable to use a method that conforms to the specification of the displaying unit 3 (e.g., the size of one effective pixel 33 and the horizontal pitch Ps of the cylindrical lens 35).

The presenting unit 15 displays the composite image that has been generated by the multi-viewpoint image converting unit 14 on the display device 31 in the displaying unit 3. Thus, the presenting unit 15 presents a stereoscopic image to the viewer.

As explained above, the multi-viewpoint image rendering apparatus 100 according to the first embodiment sequentially renders only the target objects to be rendered by using a single rendering program, while the viewpoint is changed one after another. Thus, it is possible to efficiently access the various types of data that are required in the rendering process and to reduce redundancy and overhead related to the data transfer. Consequently, a special advantageous effect is achieved where it is possible to generate a stereoscopic image having high quality at a high speed.

Next, a multi-viewpoint image rendering apparatus according to a second embodiment of the present invention will be explained. Some of the configurations that are the same as those in the first embodiment described above will be referred to by using the same reference characters, and the explanation thereof will be omitted.

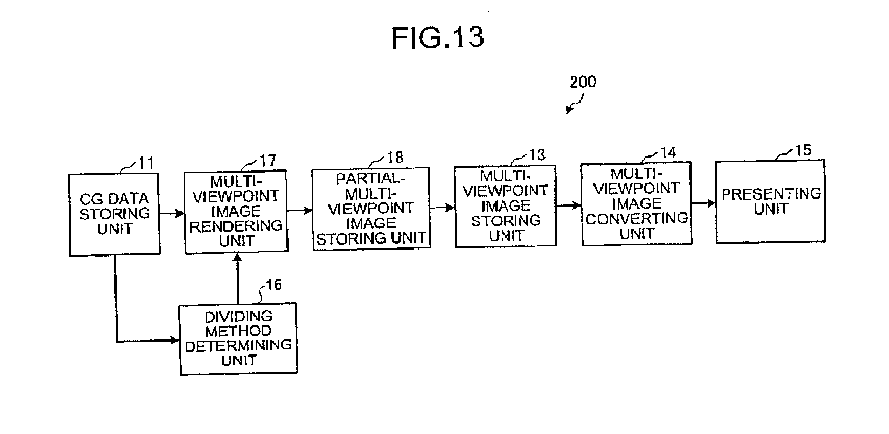

Fig. 13 is a block diagram of a functional configuration of a multi-viewpoint image rendering apparatus 200 according to the second embodiment. It is assumed that the multi-viewpoint image rendering apparatus 200 has the hardware configuration as shown in Fig. 1.

As shown in Fig. 13, in addition to the CG data storing unit 11, the multi-viewpoint image storing unit 13, the multi-viewpoint image converting unit 14, and the presenting unit 15 that have been explained above, the multi-viewpoint image rendering apparatus 200 includes a dividing method determining unit 16, a multi-viewpoint image rendering unit 17, and a partial-multi-viewpoint image storing unit 18.

Generally speaking, it has been known that the bandwidth of a memory can be a bottleneck to improve the processing speed in a CG rendering process. In the first embodiment described above, the memory bandwidth of the multi-viewpoint image storing unit 13 is not discussed; however, there is a possibility that the processing speed may be lowered depending on the bandwidth of the multi-viewpoint image storing unit 13. Thus, according to the second embodiment, in addition to the multi-viewpoint image storing unit 13, the partial-multi-viewpoint image storing unit 18 that has a smaller capacity and a larger memory bandwidth than the multi-viewpoint image storing unit 13 is used, so that the processing speed is inhibited from being lowered. The partial-multi-viewpoint image storing unit 18 may be configured with, for example, an Embedded Dynamic Random Access Memory (eDRAM).

Depending on the volume of a rendered multi-viewpoint image, there is a possibility that it may not be possible to store all the tiles into the partial-multi-viewpoint image storing unit 18. To cope with this situation, according to the second embodiment, the dividing method determining unit 16 determines a dividing method for dividing the multi-viewpoint image into a plurality of partial areas along the boundary portions of the tiles, according to the volume of the multi-viewpoint image and the storage capacity of the partial-multi-viewpoint image storing unit 18, so that it is possible to store the multi-viewpoint images that have been rendered in the partial areas into the partial-multi-viewpoint image storing unit 18.

More specifically, based on the storage capacity of the partial-multi-viewpoint image storing unit 18 and various conditions such as the volume of the multi-viewpoint image that are derived from the CG data stored in the CG data storing unit 11, the dividing method determining unit 16 calculates, by using Expression (1) below, the number of images (i.e., the number of tiles) that the partial-multi-viewpoint image storing unit 18 is able to store therein, i.e., the number of viewpoints Nf from which it is possible to render images at one time. In addition, based on the number of viewpoints Nf, the dividing method determining unit 16 calculates the total number of partial areas Nr by using Expression (2) below.

$$Nf=M/(W \times H \times C + W \times H \times Z) \qquad (1)$$

$$Nr=Ne/Nf \qquad (2)$$

In Expression (1) shown above, "M" denotes the storage capacity (unit: bytes) of the partial-multi-viewpoint image storing unit 18. "W" and "H" denote the width and the height (unit: pixels), respectively, of each of the tiles that are derived from the CG data. "C" and "Z" denote information amounts (unit: bytes) per pixel, such as a color value and a depth value, that are derived from the CG data. In Expression (1) above, the operator "/" denotes an integer division in which the decimal fractions are omitted. In Expression (2) above, the operator "/" denotes an integer division in which the decimal fractions are rounded up to the nearest integer.

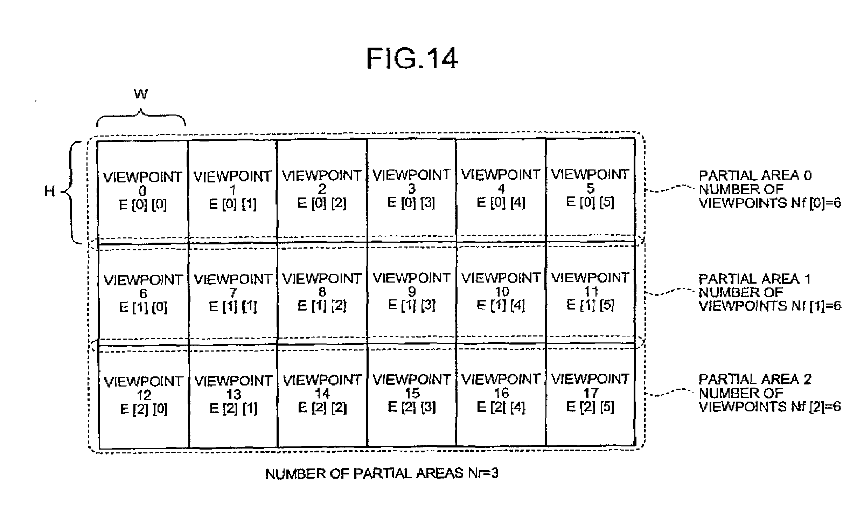

Fig. 14 is a drawing for explaining an operation of the dividing method determining unit 16. In Fig. 14, an example of partial areas that have been divided by the dividing method determining unit 16 is shown. In Fig. 14, each group of tiles (i.e., rendered image areas) that is enclosed in a broken-line box corresponds to a partial area. In the example shown in Fig. 14, the rendered image areas of the multi-viewpoint image are divided into three partial areas (i.e., the partial areas 0, 1, and 2). In Fig. 14, "W" and "H" denote the width and the height of each of the tiles, in correspondence with Expression (1) above.

By using Expressions (1) and (2), when having divided the rendered image areas of the multi-viewpoint image that is made up of the plurality of tiles into the plurality of partial areas, the dividing method determining unit 16 outputs information related to each of the partial areas as well as the calculated values of Nf and Nr to the multi-viewpoint image rendering unit 17.

More specifically, the dividing method determining unit 16 expresses the viewpoint number E contained in each of the partial areas 0, 1, and 2, by using the format of E[R][V] in which the partial area is used as a point of reference and outputs the information showing the relationship between the viewpoint number E and E[R][V] to the multi-viewpoint image rendering unit 17. In this situation, [R] denotes a partial area number identifying one of the partial areas (e.g., the partial area 0, 1, or 2), whereas [V] denotes a partial viewpoint number obtained by counting up the viewpoints within the partial area. For example, the viewpoint 7 within the partial area 1 corresponds to E[1][1].

Also, the dividing method determining unit 16 expresses the total number of viewpoints contained in each of the partial areas 0, 1, and 2 by using the format of Nf[R] in which the partial area is used as a point of reference and outputs the information to the multi-viewpoint image rendering unit 17. For example, the total number of viewpoints that are contained in the partial areas 0, 1, and 2 are expressed as Nf[0]=6, Nf[1]=6, and Nf[2]=6, respectively.

Returning to the description of Fig. 13, the multi-viewpoint image rendering unit 17 has the same configuration as the one shown in Fig. 5. Based on the information that has been input from the dividing method determining unit 16, the multi-viewpoint image rendering unit 17 renders a multi-viewpoint for each of the partial areas, by sequentially rendering images of the target objects to be rendered by using each of the rendering programs, while the viewpoint is changed one after another in units of rendering programs.

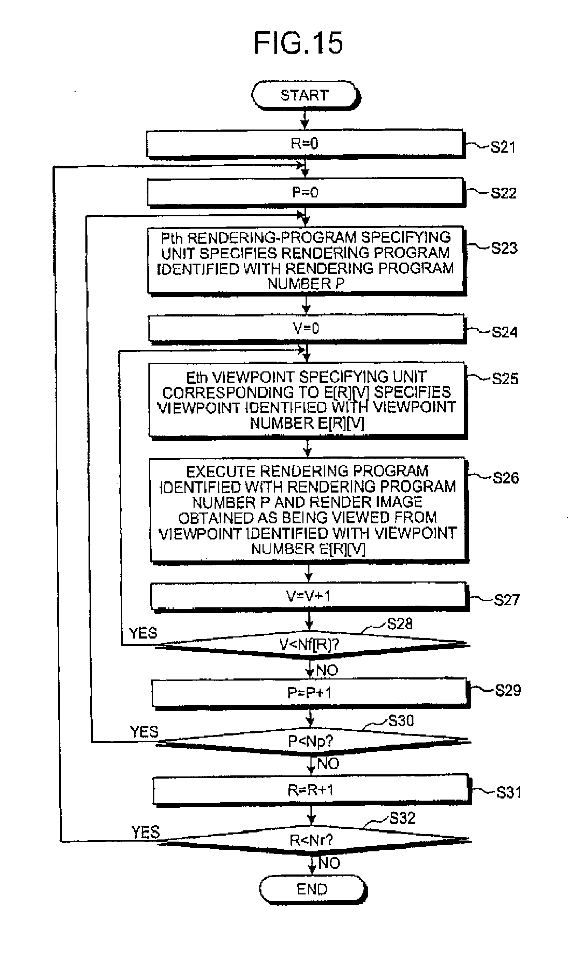

Next, an operation of the multi-viewpoint image rendering unit 17 will be explained. Fig. 15 is a flowchart of a procedure in a multi-viewpoint image rendering process performed by the multi-viewpoint image rendering unit 17.

First, the multi-viewpoint image rendering unit 17 initializes the partial area number R to 0 (step S21). After that, the multi-viewpoint image rendering unit 17 initializes the rendering program number P to 0 (step S22). Subsequently, the Pth rendering program specifying unit specifies a parameter related to the rendering program identified with the rendering program number P (step S23).

After that, the multi-viewpoint image rendering unit 17 initializes the partial viewpoint number V to zero (step S24). Subsequently, the Eth viewpoint specifying unit for the viewpoint number E corresponding to E[R][V] specifies a parameter related to the viewpoint identified with the viewpoint number E (i.e., E[R][V] (step S25). For example, in the case where R=0, P=0, and V=0 are satisfied, the zeroth viewpoint specifying unit 1212 specifies a parameter related to the viewpoint identified with E[0][0], that is, the viewpoint number 0.

The image rendering unit 124 executes the rendering program identified with the rendering program number P of which the parameter has been specified at step S23 and renders an image of the rendering target object that is obtained as being viewed from the viewpoint identified with the viewpoint number E (i.e., E[R][V]), based on the parameter of the viewpoint number E (i.e., E[R][V]) that has been specified at step S25 (step S26). The image that has been rendered at step S26 is stored into the rendered image area within the partial-multi-viewpoint image storing unit 18 that corresponds to the viewpoint of the image, i.e., the viewpoint number E (i.e., E[R][V]).

After that, the multi-viewpoint image rendering unit 17 increments the partial viewpoint number V by 1 (step S27) and judges whether the value of the partial viewpoint number V is smaller than the number of viewpoints Nf[R] (step S28). In the case where the multi-viewpoint image rendering unit 17 has judged that the value of the partial viewpoint number V is smaller than the number of viewpoints Nf[R] (step S28: Yes), the process returns to step S25 so that the target of the process is changed to the next partial viewpoint number.

On the other hand, at step 828, in the case where the multi-viewpoint image rendering unit 17 has judged that the value of the partial viewpoint number V is equal to or larger than the number of viewpoints Nf[R] (Step S28: No), the multi-viewpoint image rendering unit 17 increments the rendering program number P by 1 (step S29) and judges whether the value of the rendering program number P is smaller than the total number of rendering programs Np (step S30).

At step S30, in the case where the multi-viewpoint image rendering unit 17 has judged that the value of the rendering program number P is smaller than the total number of rendering programs Np (step S30: Yes), the process returns to step S23 so that the target of the process is changed to the next rendering program.

On the other hand, at step S30, in the case where the multi-viewpoint image rendering unit 17 has judged that the value of the rendering program number P is equal to or larger than the total number of rendering programs Np (step S30: No), the multi-viewpoint image rendering unit 17 increments the partial area number R by 1 (step S31) and judges whether the value of the partial area number R is smaller than the total number of partial areas Nr (step S32).

At step S32, in the case where the multi-viewpoint image rendering unit 17 has judged that the value of the partial area number R is smaller than the total number of partial areas Nr (step S32: Yes), the process returns to step S22 so that the target of the process is changed to the next partial area.

On the other hand, at step S32, in the case where the multi-viewpoint image rendering unit 17 has judged that the value of the partial area number R is equal to or larger than the total number of partial areas Nr (step S32: No), the process is ended. As explained above, the multi-viewpoint image rendering process performed by the multi-viewpoint image rendering unit 17 has a triple structure that includes a loop (i.e., a partial viewpoint loop) at steps S25 through S28 that is related to the partial viewpoint numbers, a loop at steps S23 through S30 that is related to the rendering programs, and a loop at steps S22 through S32 that is related to the partial areas.

Every time the multi-viewpoint image corresponding to one partial area is rendered by the multi-viewpoint image rendering unit 17, the partial-multi-viewpoint image storing unit 18 outputs the rendered multi-viewpoint image corresponding to the one partial area to the multi-viewpoint image storing unit 13. Accordingly, the multi-viewpoint image storing unit 13 sequentially stores therein the multi-viewpoint images each of which corresponds a different one of the partial areas and that have been input thereto by the partial-multi-viewpoint image storing unit 18, so as to eventually store therein the multi-viewpoint images corresponding to all the partial areas. As a result, the multi-viewpoint image storing unit 13 stores therein one multi-viewpoint image that is made up of the tiles respectively corresponding to all the viewpoints.

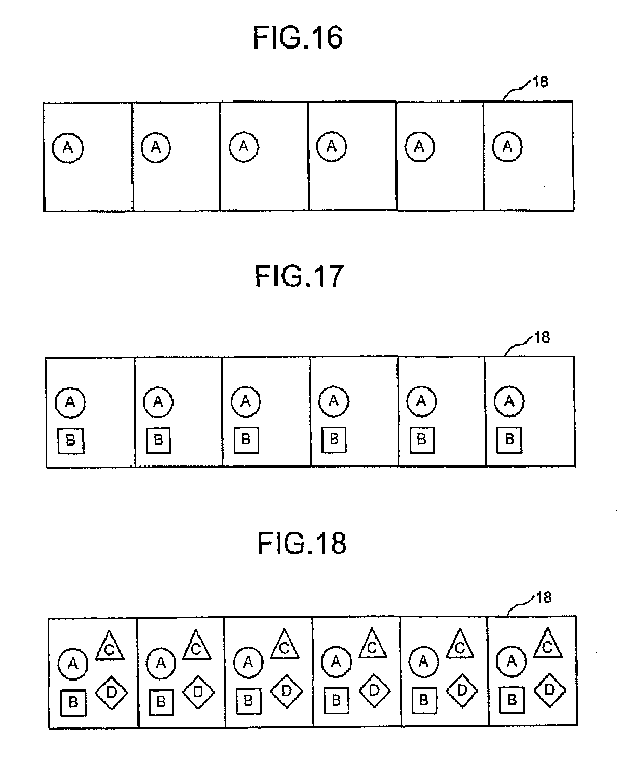

Figs. 16 to 21 are drawings for explaining the process up to the step where a multi-viewpoint image is rendered through the multi-viewpoint image rendering process described above. In this example, it is assumed that Nf[0]=Nf[1] =Nf[2]=6, Np=3, and Nr=3 are satisfied.

As shown in Fig. 16, in the first partial viewpoint loop in which the R=0 and P=0 are satisfied, the multi-viewpoint image rendering unit 17 executes the rendering program identified with the rendering program number 0, while the viewpoint number E is changed from 0 to 5. As a result, the multi-viewpoint image rendering unit 17 renders images of the rendering target object A that are obtained as being viewed from the viewpoints identified with the viewpoint numbers 0 to 5 into the partial-multi-viewpoint image storing unit 18.

Also, as shown in Fig. 17, in the partial viewpoint loop in which the R=0 and P=1 are satisfied, the multi-viewpoint image rendering unit 17 executes the rendering program identified with the rendering program number 1, while the viewpoint number E is changed from 0 to 5. As a result, the multi-viewpoint image rendering unit 17 renders images of the rendering target object B that are obtained as being viewed from the viewpoints identified with the viewpoint numbers 0 to 5 into the partial-multi-viewpoint image storing unit 18.

In addition, as shown in Fig. 18, in the partial viewpoint loop in which the R=0 and P=2 are satisfied, the multi-viewpoint image rendering unit 17 executes the rendering program identified with the rendering program number 2, while the viewpoint number E is changed from 0 to 5. As a result, the multi-viewpoint image rendering unit 17 renders images of the rendering target objects C and D that are obtained as being viewed from the viewpoints identified with the viewpoint numbers 0 to 5 into the partial-multi-viewpoint image storing unit 18. At this point in time, the rendering process for the partial area 0 is completed.

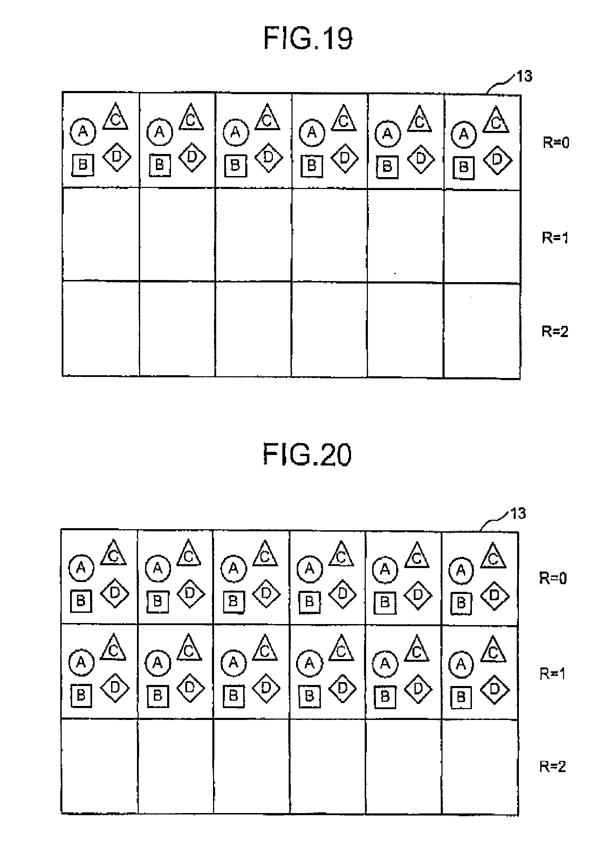

The partial-multi-viewpoint image storing unit 18 copies the multi-viewpoint images that correspond to the partial area 0 and have been rendered by the multi-viewpoint image rendering unit 17 into the tiles that correspond to the viewpoint numbers 0 to 5 within the multi-viewpoint image storing unit 13. After that, the partial-multi-viewpoint image storing unit 18 clears the stored multi-viewpoint images from the storage area thereof. In Fig. 19, the state of the multi-viewpoint image storing unit 13 storing therein the multi-viewpoint images corresponding to the partial area 0 is shown.

In the following partial viewpoint loop in which R=1 and P=0 are satisfied, the multi-viewpoint image rendering unit 17 executes the rendering program identified with the rendering program number 0, while the viewpoint number E is changed from 6 to 11. As a result, the multi-viewpoint image rendering unit 17 renders images of the rendering target object A that are obtained as being viewed from the viewpoints identified with the viewpoint numbers 6 to 11 into the partial-multi-viewpoint image storing unit 18. Because the result of the rendering process is similar to the one shown in Fig. 16, the drawing thereof is omitted.

Also, in the partial viewpoint loop in which R=1 and P=1 are satisfied, the multi-viewpoint image rendering unit 17 executes the rendering program identified with the rendering program number 1, while the viewpoint number E is changed from 6 to 11. As a result, the multi-viewpoint image rendering unit 17 renders images of the rendering target object B that are obtained as being viewed from the viewpoints identified with the viewpoint numbers 6 to 11 into the partial-multi-viewpoint image storing unit 18. Because the result of the rendering process is similar to the one shown in Fig. 17, the drawing thereof is omitted.

In addition, in the partial viewpoint loop in which R=1 and P=2 are satisfied, the multi-viewpoint image rendering unit 17 executes the rendering program identified with the rendering program number 2, while the viewpoint number E is changed from 6 to 11. As a result, the multi-viewpoint image rendering unit 17 renders images of the rendering target objects C and D that are obtained as being viewed from the viewpoints identified with the viewpoint numbers 6 to 11 into the partial-multi-viewpoint image storing unit 18. At this point in time, the rendering process for the partial area 1 is completed. Because the result of the rendering process is similar to the one shown in Fig. 18, the drawing thereof is omitted.

The partial-multi-viewpoint image storing unit 18 copies the multi-viewpoint images that correspond to the partial area 1 and have been rendered by the multi-viewpoint image rendering unit 17 into the tiles that correspond to the viewpoint numbers 6 to 11 within the multi-viewpoint image storing unit 13. After that, the partial-multi-viewpoint image storing unit 18 clears the stored multi-viewpoint images from the storage area thereof. In Fig. 20, the state of the multi-viewpoint image storing unit 13 storing therein the multi-viewpoint images corresponding to the partial areas 0 and 1 is shown.

In the following partial viewpoint loop in which R=2 and P=0 are satisfied, the multi-viewpoint image rendering unit 17 executes the rendering program identified with the rendering program number 0, while the viewpoint number E is changed from 12 to 17. As a result, the multi-viewpoint image rendering unit 17 renders images of the rendering target object A that are obtained as being viewed from the viewpoints identified with the viewpoint numbers 12 to 17 into the partial-multi-viewpoint image storing unit 18. Because the result of the rendering process is similar to the one shown in Fig. 16, the drawing thereof is omitted.

Also, in the partial viewpoint loop in which R=2 and P=1 are satisfied, the multi-viewpoint image rendering unit 17 executes the rendering program identified with the rendering program number 1, while the viewpoint number E is changed from 12 to 17. As a result, the multi-viewpoint image rendering unit 17 renders images of the rendering target object B that are obtained as being viewed from the viewpoints identified with the viewpoint numbers 12 to 17 into the partial-multi-viewpoint image storing unit 18. Because the result of the rendering process is similar to the one shown in Fig. 17, the drawing thereof is omitted.

In addition, in the partial viewpoint loop in which R=2 and P=2 are satisfied, the multi-viewpoint image rendering unit 17 executes the rendering program identified with the rendering program number 2, while the viewpoint number E is changed from 12 to 17. As a result, the multi-viewpoint image rendering unit 17 renders images of the rendering target objects C and D that are obtained as being viewed from the viewpoints identified with the viewpoint numbers 12 to 17 into the partial-multi-viewpoint image storing unit 18. At this point in time, the rendering process for the partial area 2 is completed. Because the result of the rendering process is similar to the one shown in Fig. 18, the drawing thereof is omitted.

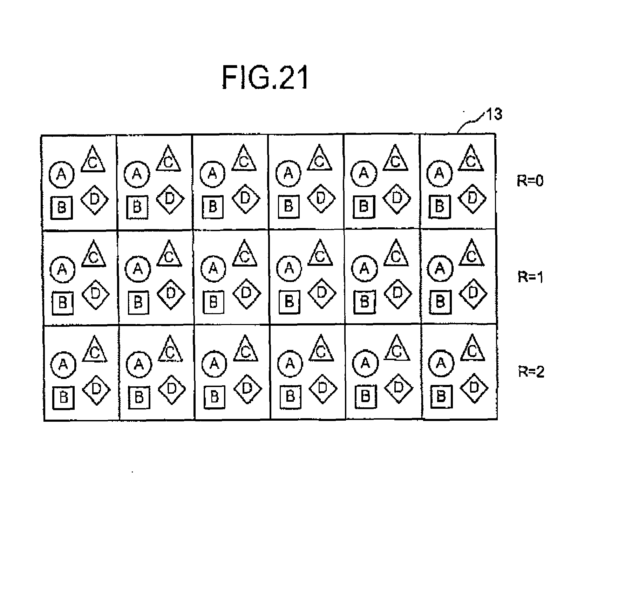

The partial-multi-viewpoint image storing unit 18 copies the multi-viewpoint images that correspond to the partial area 2 and have been rendered by the multi-viewpoint image rendering unit 17 into the tiles that correspond to the viewpoint numbers 12 to 17 within the multi-viewpoint image storing unit 13. After that, the partial-multi-viewpoint image storing unit 18 clears the stored multi-viewpoint images from the storage area thereof. In Fig. 21, the state of the multi-viewpoint image storing unit 13 storing therein the multi-viewpoint images corresponding to the partial areas 0, 1, and 2 is shown. As explained above, by sequentially storing the multi-viewpoint images respectively corresponding to the partial areas into the multi-viewpoint image storing unit 13, it is possible to obtain one multi-viewpoint image.

As explained above, when the multi-viewpoint image rendering apparatus 200 according to the second embodiment is used, the multi-viewpoint image is divided into the plurality of partial areas along the boundary portions of the tiles so that a multi-viewpoint image is rendered for each of the partial areas. As a result, it is possible to efficiently utilize the partial-multi-viewpoint image storing unit 18 that has a larger memory bandwidth than the multi-viewpoint image storing unit 13. Consequently, a special advantageous effect is achieved where it is possible to generate a stereoscopic image having high quality at a high speed.

Next, a multi-viewpoint image rendering apparatus according to a third embodiment of the present invention will be explained. Some of the configurations that are the same as those in the first and the second embodiments described above will be referred to by using the same reference characters, and the explanation thereof will be omitted.

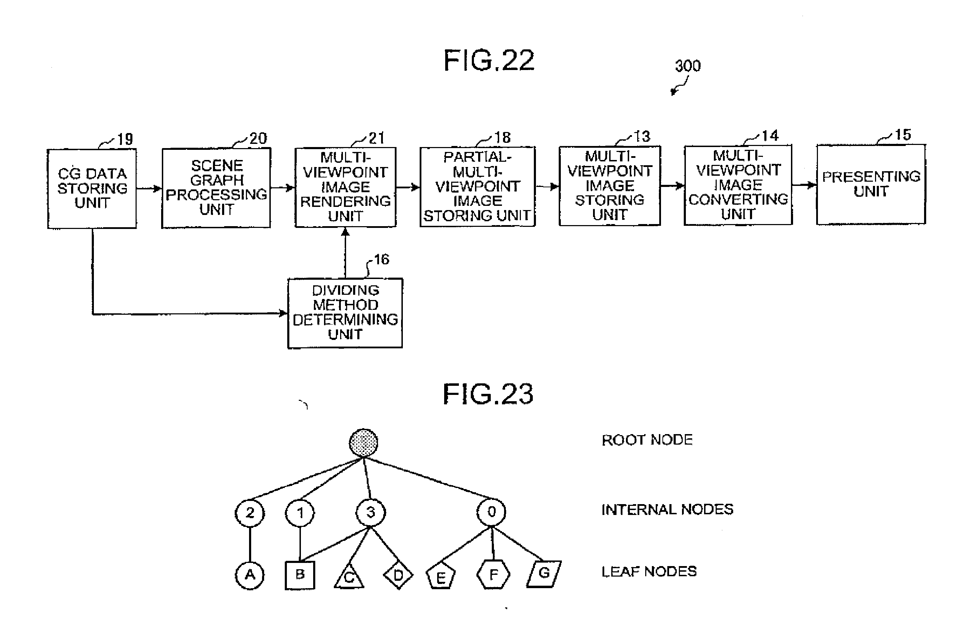

Fig. 22 is a block diagram illustrating a functional configuration of a multi-viewpoint image rendering apparatus 300 according to the third embodiment. It is assumed that the multi-viewpoint image rendering apparatus 300 has the hardware configuration as shown in Fig. 1.

As shown in Fig. 22, in addition to the multi-viewpoint image storing unit 13, the multi-viewpoint image converting unit 14, the presenting unit 15, the dividing method determining unit 16, and the partial-multi-viewpoint image storing unit 18 that have been explained above, the multi-viewpoint image rendering apparatus 300 includes a CG data storing unit 19, scene graph processing unit 20 and a multi-viewpoint image rendering unit 21.

In the first and the second embodiments described above, as many rendering programs as Np are sequentially executed, starting with the one identified with the rendering program number 0 and ending with the one identified with the rendering program number Np-1. However, with an actual CG picture, the order in which the rendering programs are executed is not always the same, but is dynamically changed according to the rendered scenes. Further, it is not necessarily the case that all of as many rendering programs as Np are always executed.

To cope with this situation, the multi-viewpoint image rendering apparatus 300 according to the third embodiment stores, into the CG data storing unit 19, as many scene graphs shown in Fig. 23 as suitable for the scenes. By selectively using one of the scene graphs for each of the scenes to be rendered, the multi-viewpoint image rendering apparatus 300 renders a multi-viewpoint image while using a rendering method that is suitable for the scene. In this situation, as shown in Fig. 23, each of the scene graphs has a tree structure that has three layers such as a root node serving as a parent node of the scene graph, an internal node in which the rendering program numbers are defined, and a leaf node in which the rendering target objects are defined.

The scene graph processing unit 20 reads one of the scene graphs stored in the CG data storing unit 19 in correspondence with the scene to be rendered. By traversing the read scene graph in depth-first order, the scene graph processing unit 20 outputs, to the multi-viewpoint image rendering unit 21, information (hereinafter, "scene information") in which the order in which the rendering programs should be executed (expressed with the rendering program numbers) is shown in correspondence with the rendering target objects to be rendered by using the rendering program identified with each of the rendering program numbers.

For example, in the example of the scene graph shown in Fig. 23, scene information instructing the following procedure is output to the multi-viewpoint image rendering unit 21: First, the rendering target object A is rendered by using the rendering program identified with the rendering program number 2; secondly, the rendering target object B is rendered by using the rendering program identified with the rendering program number 1; next, the rendering target object B is dually rendered, and also the rendering target objects C and D are rendered, by using the rendering program identified with the rendering program number 3; and lastly, the rendering target objects E, F, and G are rendered by using the rendering program identified with the rendering program number 0.

Also, every time the scene changes to a new scene, the scene graph processing unit 20 reads a scene graph that corresponds to the new scene from the CG data storing unit 19 and outputs scene information for the scene graph to the multi-viewpoint image rendering unit 21. Another arrangement is acceptable in which the scene graph processing unit 20 dynamically reconstructs a new scene graph according to the scene to be rendered, by changing the order in which the rendering programs should be executed that has been defined in the scene graph and changing the rendering target objects to be rendered by using each of the rendering programs.

The multi-viewpoint image rendering unit 21 has the same functions as the multi-viewpoint image rendering unit 17. In addition, based on the scene information that has been input thereto from the scene graph processing unit 20 serving in the previous stage and according to the order in which the rendering programs should be executed that has been instructed in the scene information, the multi-viewpoint image rendering unit 21 sequentially renders images of the rendering target objects to be rendered by using each of the rendering programs, while the viewpoint is changed one after another.

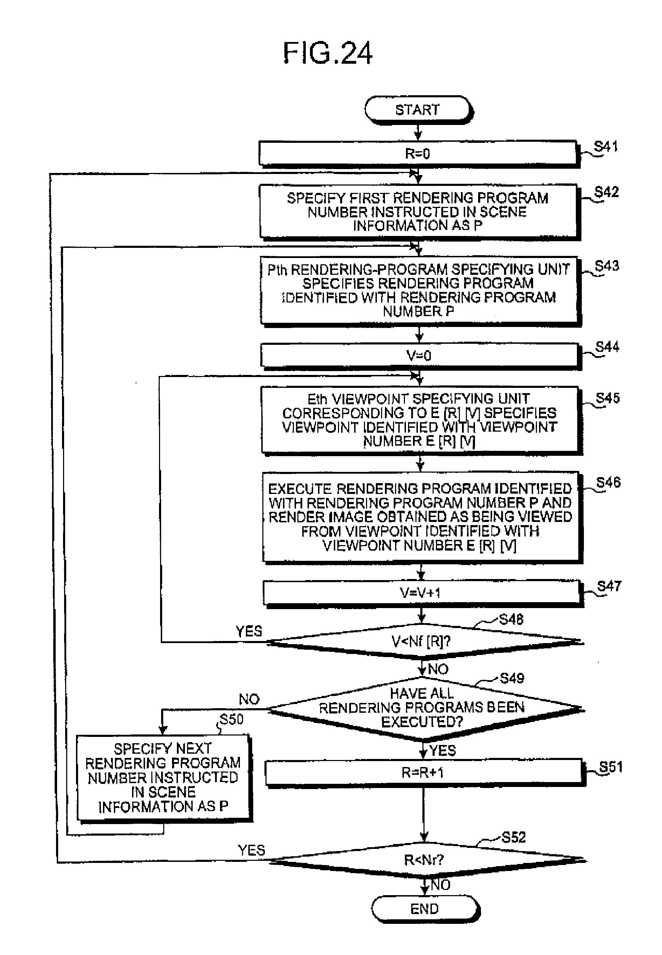

Next, an operation of the multi-viewpoint image rendering unit 21 will be explained. Fig. 24 is a flowchart of a procedure in a multi-viewpoint image rendering process performed by the multi-viewpoint image rendering unit 21.

First, the multi-viewpoint image rendering unit 21 initializes the partial area number R to 0 (step S41). Next, according to the order in which the rendering programs should be executed that has been instructed in the scene information, the multi-viewpoint image rendering unit 21 specifies the first rendering program number as P (step S42). For example, in the case where the scene graph shown'in Fig. 23 is used, the multi-viewpoint image rendering unit 21 specifies that P=2 is satisfied.

After that, the Pth rendering program specifying unit specifies a parameter related to the rendering program identified with the rendering program number P (step S43). Subsequently, the multi-viewpoint image rendering unit 21 initializes the partial viewpoint number V to 0 (step S44). After that, the Eth viewpoint specifying unit for the viewpoint number E corresponding to E[R][V] specifies a parameter related to the viewpoint identified with viewpoint number E (i.e., E[R][V]) (step S45).

The image rendering unit 124 executes the rendering program identified with the rendering program number P of which the parameter has been specified at step S43 and renders an image of the rendering target object that is obtained as being viewed from the viewpoint identified with the viewpoint number E (i.e., E[R][V]), based on the parameter of the viewpoint number E (i.e., E[R][V]) that has been specified at step S45 (step S46). The image that has been rendered at step S46 is stored into the rendered image area within the partial-multi-viewpoint image storing unit 18 that corresponds to the viewpoint of the image, i.e., the viewpoint number E (i.e., E[R][V]).

Subsequently, the multi-viewpoint image rendering unit 21 increments the partial viewpoint number V by 1 (step S47) and judges whether the value of the partial viewpoint number V is smaller than the number of viewpoints Nf [R] (step S48). In the case where the multi-viewpoint image rendering unit 21 has judged that the value of the partial viewpoint number V is smaller than the number of viewpoints Nf[R] (step S48: Yes), the process returns to step S45 so that the target of the process is changed to the next partial viewpoint number.

On the other hand, at step S48, in the case where the multi-viewpoint image rendering unit 21 has judged that the value of the partial viewpoint number V is equal to or larger than the number of viewpoints Nf[R] (step S48: No), the multi-viewpoint image rendering unit 21 judges whether all the rendering programs that are instructed in the scene information have been executed (step S49). In the case where the multi-viewpoint image rendering unit 21 has judged that there are one or more rendering programs that have not yet been executed (step S49: No), according to the order in which the rendering programs should be executed that has been instructed in the scene information, the multi-viewpoint image rendering unit 21 specifies the next rendering program number as P (step S50). After that, the process returns to step S43.

On the other hand, at step S49, in the case where the multi-viewpoint image rendering unit 21 has judged that all the rendering programs that are instructed in the scene information have been executed (step S49: Yes) , the multi-viewpoint image rendering unit 21 increments the partial area number R by 1 (step S51) and judges whether the value of the partial area number R is smaller than the total number of partial areas Nr (step S52).

At step S52, in the case where the multi-viewpoint image rendering unit 21 has judged that the value of the partial area number R is smaller than the total number of partial areas Nr (step S52; Yes), the process returns to step S42 so that the target of the process is changed to the next partial area.

On the other hand, at step S52, in the case where the multi-viewpoint image rendering unit 21 has judged that the value of the partial area number R is equal to or larger than the total number of partial areas Nr (step S52: No), the process is ended.

As explained above, with the multi-viewpoint image rendering apparatus 300 according to the third embodiment, by using the scene graph having the rendering program numbers in the internal node thereof, it is possible to execute an arbitrary set of rendering programs in an arbitrary order, according to the scene. Consequently, it is possible to render a practical multi-viewpoint image that contains changing of the scenes.

In the third embodiment, the example in which the scene graph processing unit 20 is added to the configuration according to the second embodiment is explained. However, the present invention is not limited to this example. Another arrangement is acceptable in which the scene graph processing unit 20 is added to the configuration according to the first embodiment.

The exemplary embodiments of the present invention have been explained so far. However, the present invention is not limited to these exemplary embodiments. It is possible to apply various modifications, substitutions, and additions to the exemplary embodiments without departing the scope of the present invention.

For example, an arrangement is acceptable in which the program that executes the processes described above that is performed in the multi-viewpoint image rendering apparatus 100, 200, or 300 is provided as being recorded in an installable or executable format, on a computer-readable recording medium such as a Compact Disk Read-Only Memory (CD-ROM), a Floppy (registered trademark) Disk (FD), or a Digital Versatile Disk (DVD).

Another arrangement is acceptable in which the program that executes the processes performed in the multi-viewpoint image rendering apparatus 100, 200, or 300 is stored in a computer that is connected to a network such as the Internet and provided as being downloaded through the network via the communicating unit 7.

In this situation, when the program is read from the recording medium and executed in the multi-viewpoint image rendering apparatus 100, 200, or 300, the program is loaded into the RAM/VRAM 5, so that the constituent elements explained in the description of the software configuration are generated in the RAM/VRAM 5.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1. A multi-viewpoint image rendering apparatus comprising:

   a first storing unit (11) that stores shape data indicating shapes of rendering target objects, a plurality of rendering programs in each of which a rendering procedure is described, and viewpoint data defining information related to a plurality of viewpoint positions that are different from one another;
   a first specifying unit (1211) that specifies one of the rendering programs and a rendering target for each of the rendering programs;
   a second specifying unit (1212) that specifies the respective viewpoint positions defined in the viewpoint data as a rendering condition that is used when each of the rendering programs is executed;
   a rendering unit (124) that sequentially renders the shape data specified as the rendering target for the rendering program, with respect to each of the viewpoint positions specified as the rendering condition, for execution of each of the rendering programs, and generates a multi-viewpoint image composed of a plurality of rendered images respectively corresponding to the viewpoint positions; and
   a second storing unit (13) that stores the multi-viewpoint image generated by the rendering unit (124).

2. The apparatus according to claim 1, further comprising:

   a dividing method determining unit (16) that determines a dividing method used for dividing the multi-viewpoint image into a plurality of partial areas; and
   a third storing unit (18) that stores multi-viewpoint images respectively corresponding to the partial areas, wherein the rendering unit (17) generates the multi-viewpoint image for the respective partial areas and causes the third storing unit to output the multi-viewpoint images respectively corresponding to the partial areas to the second storing unit (13).

3. The apparatus according to claim 2, wherein the dividing method determining unit (16) determines the dividing method according to a volume of the multi-viewpoint image and a storage capacity of the third storing unit (18).

4. The apparatus according to claim 2, wherein a memory bandwidth of the third storing unit (18) is larger than a memory bandwidth of the second storing unit (13).

5. The apparatus according to claim 4, wherein the storage capacity of the third storing unit (18) is smaller than a storage capacity of the second storing unit (13).

6. The apparatus according to claim 2, further comprising:

   a fourth storing unit (19) that stores a plurality of scene graphs each of which defining, for a different one of scenes, a relationship between an order of executing the rendering programs and the rendering target object serving as the rendering target for each of the rendering programs; and
   a scene graph processing unit (20) that reads one of the scene graphs corresponding to a scene to be rendered from the fourth storing unit (19), and outputs, to the rendering unit, scene information instructing the order of executing the rendering programs defined in the read scene graph and the shape data of the rendering target object serving as the rendering target for each of the rendering programs, wherein
the rendering unit (21) renders the shape data instructed as the rendering target for each of the rendering programs, with respect to each of the viewpoint positions specified as the rendering condition, according to the order of executing the rendering programs instructed in the scene information.

7. The apparatus according to claim 6, wherein the scene graph processing unit (20) reconstructs, in correspondence with each of scenes to be rendered, the relationship between the order of executing the rendering programs defined in the scene graph and the rendering target object to be rendered by using each of the rendering programs.

8. The apparatus according to claim 1, further comprising:

a multi-viewpoint image converting unit (14) that converts a pixel arrangement contained in the multi-viewpoint image stored in the second storing unit (13) and generates a composite image for displaying a stereoscopic image; and
a presenting unit (15) that presents the stereoscopic image expressed with the composite image.

9. A multi-viewpoint image rendering method comprising:

specifying a rendering program and a rendering target for each of a plurality of rendering from shape data indicating shapes of rendering target objects, the plurality of rendering programs in each of which a rendering procedure is described, and viewpoint data defining information related to a plurality of viewpoint positions that are different from one another;
specifying viewpoint positions that are different from one another as a rendering condition used when each of the rendering programs is executed; and
sequentially rendering the shape data specified as the rendering target for the rendering program, with respect to each of the viewpoint positions specified as the rendering condition, for execution of each of the rendering programs, and generating a multi-viewpoint image composed of a plurality of rendered images respectively corresponding to the viewpoint positions.

10. A computer program product having a computer readable medium including programmed instructions for rendering a multi-viewpoint image, wherein the instructions, when executed by a computer, cause the computer to perform:

specifying a rendering program and a rendering target for each of a plurality of rendering programs from shape data indicating shapes of rendering target objects, the plurality of rendering programs in each of which a rendering procedure is described, and viewpoint data defining information related to a plurality of viewpoint positions that are different from one another;
specifying viewpoint positions that are different from one another as a rendering condition used when each of the rendering programs is executed; and
sequentially rendering the shape data specified as the rendering target for the rendering program, with respect to each of the viewpoint positions specified as the rendering condition, for execution of each of the rendering programs, and generating a multi-viewpoint image composed of a plurality of rendered images respectively corresponding to the viewpoint positions.

# FIG.1

# FIG.2

# FIG.3

# FIG.4

# FIG.5

# FIG.6

START

P=0 —S11

Pth RENDERING-PROGRAM
SPECIFYING UNIT SPECIFIES
RENDERING PROGRAM IDENTIFIED
WITH RENDERING PROGRAM
NUMBER P —S12

E=0 —S13

Eth VIEWPOINT SPECIFYING UNIT
SPECIFIES VIEWPOINT IDENTIFIED
WITH VIEWPOINT NUMBER E —S14

EXECUTE RENDERING PROGRAM
IDENTIFIED WITH RENDERING
PROGRAM NUMBER P AND RENDER
IMAGE OBTAINED AS BEING VIEWED
FROM VIEWPOINT IDENTIFIED WITH
VIEWPOINT NUMBER E —S15

E=E+1 —S16

S17
YES      E<Ne?

NO

P=P+1 —S18

S19
YES      P<Np?

NO

END

# FIG.7

13

| VIEWPOINT 0 | VIEWPOINT 1 | VIEWPOINT 2 | VIEWPOINT 3 | VIEWPOINT 4 | VIEWPOINT 5 |
|---|---|---|---|---|---|
| VIEWPOINT 6 | VIEWPOINT 7 | VIEWPOINT 8 | VIEWPOINT 9 | VIEWPOINT 10 | VIEWPOINT 11 |
| VIEWPOINT 12 | VIEWPOINT 13 | VIEWPOINT 14 | VIEWPOINT 15 | VIEWPOINT 16 | VIEWPOINT 17 |

# FIG.8

13

| Ⓐ | Ⓐ | Ⓐ | Ⓐ | Ⓐ | Ⓐ |
|---|---|---|---|---|---|
| Ⓐ | Ⓐ | Ⓐ | Ⓐ | Ⓐ | Ⓐ |
| Ⓐ | Ⓐ | Ⓐ | Ⓐ | Ⓐ | Ⓐ |

# FIG.9

# FIG.10

# FIG.11

# FIG.12

# FIG.13

200

EP 2 040 479 A2

# FIG.14

| W |
|---|

| | VIEWPOINT 0 E [0] [0] | VIEWPOINT 1 E [0] [1] | VIEWPOINT 2 E [0] [2] | VIEWPOINT 3 E [0] [3] | VIEWPOINT 4 E [0] [4] | VIEWPOINT 5 E [0] [5] |
|---|---|---|---|---|---|---|
| H | VIEWPOINT 6 E [1] [0] | VIEWPOINT 7 E [1] [1] | VIEWPOINT 8 E [1] [2] | VIEWPOINT 9 E [1] [3] | VIEWPOINT 10 E [1] [4] | VIEWPOINT 11 E [1] [5] |
| | VIEWPOINT 12 E [2] [0] | VIEWPOINT 13 E [2] [1] | VIEWPOINT 14 E [2] [2] | VIEWPOINT 15 E [2] [3] | VIEWPOINT 16 E [2] [4] | VIEWPOINT 17 E [2] [5] |

PARTIAL AREA 0 NUMBER OF VIEWPOINTS Nf [0]=6

PARTIAL AREA 1 NUMBER OF VIEWPOINTS Nf [1]=6

PARTIAL AREA 2 NUMBER OF VIEWPOINTS Nf [2]=6

NUMBER OF PARTIAL AREAS Nr=3

EP 2 040 479 A2

# FIG.15

```
        ( START )
            │
            ▼
┌─────────────────────────────────┐
│              R=0                │ ──S21
└─────────────────────────────────┘
            │
            ▼
┌─────────────────────────────────┐
│              P=0                │ ──S22
└─────────────────────────────────┘
            │
            ▼
┌─────────────────────────────────┐
│ Pth RENDERING-PROGRAM SPECIFYING │ ──S23
│ UNIT SPECIFIES RENDERING PROGRAM │
│ IDENTIFIED WITH RENDERING PROGRAM│
│          NUMBER P               │
└─────────────────────────────────┘
            │
            ▼
┌─────────────────────────────────┐
│              V=0                │ ──S24
└─────────────────────────────────┘
            │
            ▼
┌─────────────────────────────────┐
│   Eth VIEWPOINT SPECIFYING UNIT  │ ──S25
│ CORRESPONDING TO E[R][V] SPECIFIES│
│ VIEWPOINT IDENTIFIED WITH VIEWPOINT│
│        NUMBER E[R][V]           │
└─────────────────────────────────┘
            │
            ▼
┌─────────────────────────────────┐
│    EXECUTE RENDERING PROGRAM     │ ──S26
│ IDENTIFIED WITH RENDERING PROGRAM│
│   NUMBER P AND RENDER IMAGE      │
│  OBTAINED AS BEING VIEWED FROM   │
│ VIEWPOINT IDENTIFIED WITH VIEWPOINT│
│        NUMBER E[R][V]           │
└─────────────────────────────────┘
            │
            ▼
┌─────────────────────────────────┐
│             V=V+1               │ ──S27
└─────────────────────────────────┘
            │
            ▼      ╱S28
  YES  ◇ V<Nf[R]? ◇
            │NO
            ▼
┌─────────────────────────────────┐
│             P=P+1               │ ──S29
└─────────────────────────────────┘
            │
            ▼      ╱S30
  YES  ◇  P<Np?  ◇
            │NO
            ▼
┌─────────────────────────────────┐
│             R=R+1               │ ──S31
└─────────────────────────────────┘
            │
            ▼      ╱S32
  YES  ◇  R<Nr?  ◇
            │NO
            ▼
         ( END )
```

25

# FIG.16

# FIG.17

# FIG.18

# FIG.19

# FIG.20

# FIG.21

# FIG.22

| CG DATA STORING UNIT | → | SCENE GRAPH PROCESSING UNIT | → | MULTI-VIEWPOINT IMAGE RENDERING UNIT | → | PARTIAL-MULTI-VIEWPOINT IMAGE STORING UNIT | → | MULTI-VIEWPOINT IMAGE STORING UNIT | → | MULTI-VIEWPOINT IMAGE CONVERTING UNIT | → | PRESENTING UNIT |

19   20   21   18   13   14   15

DIVIDING METHOD DETERMINING UNIT — 16

# FIG.23

ROOT NODE

INTERNAL NODES

LEAF NODES

EP 2 040 479 A2

# FIG.24

```
        ( START )
            │
            ▼
┌─────────────────────────┐  S41
│          R=0            │
└─────────────────────────┘
            │
            ▼
┌─────────────────────────┐  S42
│ SPECIFY FIRST RENDERING  │
│ PROGRAM NUMBER INSTRUCTED│
│ IN SCENE INFORMATION AS P│
└─────────────────────────┘
            │
            ▼
┌─────────────────────────┐  S43
│ Pth RENDERING-PROGRAM    │
│ SPECIFYING UNIT SPECIFIES│
│ RENDERING PROGRAM        │
│ IDENTIFIED WITH RENDERING│
│ PROGRAM NUMBER P         │
└─────────────────────────┘
            │
            ▼
┌─────────────────────────┐  S44
│          V=0            │
└─────────────────────────┘
            │
            ▼
┌─────────────────────────┐  S45
│ Eth VIEWPOINT SPECIFYING │
│ UNIT CORRESPONDING TO    │
│ E [R] [V] SPECIFIES      │
│ VIEWPOINT IDENTIFIED WITH│
│ VIEWPOINT NUMBER E [R][V]│
└─────────────────────────┘
            │
            ▼
┌─────────────────────────┐  S46
│ EXECUTE RENDERING PROGRAM│
│ IDENTIFIED WITH RENDERING│
│ PROGRAM NUMBER P AND     │
│ RENDER IMAGE OBTAINED AS │
│ BEING VIEWED FROM        │
│ VIEWPOINT IDENTIFIED WITH│
│ VIEWPOINT NUMBER E [R][V]│
└─────────────────────────┘
            │
            ▼
┌─────────────────────────┐  S47
│          V=V+1          │
└─────────────────────────┘
            │
            ▼
       ◇ V<Nf [R]? ◇  S48  ──YES──►
            │ NO
            ▼
       ◇ HAVE ALL         ◇  S49  ──NO──► ┌──────────────┐ S50
       ◇ RENDERING        ◇               │ SPECIFY NEXT │
       ◇ PROGRAMS BEEN    ◇               │ RENDERING    │
       ◇ EXECUTED?        ◇               │ PROGRAM      │
            │ YES                         │ NUMBER       │
            ▼                             │ INSTRUCTED IN│
┌─────────────────────────┐  S51          │ SCENE        │
│          R=R+1          │               │ INFORMATION  │
└─────────────────────────┘               │ AS P         │
            │                             └──────────────┘
            ▼
       ◇ R<Nr? ◇  S52  ──YES──►
            │ NO
            ▼
        (  END  )
```

**REFERENCES CITED IN THE DESCRIPTION**

**Patent documents cited in the description**

- JP 3358466 B